(19) Europäisches Patentamt
European Patent Office
Office européen des brevets

(11) EP 4 675 703 A1

(12) EUROPEAN PATENT APPLICATION

(43) Date of publication:
**07.01.2026 Bulletin 2026/02**

(21) Application number: **25185276.0**

(22) Date of filing: **25.06.2025**

(51) International Patent Classification (IPC):
***H01M 4/36*** (2006.01) ***H01M 4/525*** (2010.01)
***H01M 4/505*** (2010.01) ***H01M 10/052*** (2010.01)
***C01G 53/00*** (2025.01) ***H01M 4/131*** (2010.01)
***H01M 4/1391*** (2010.01) ***H01M 10/0525*** (2010.01)
***H01M 4/02*** (2006.01) ***H01M 10/0567*** (2010.01)

(52) Cooperative Patent Classification (CPC):
**H01M 4/131; H01M 4/366; H01M 4/525; H01M 10/0525; H01M 10/0567;** H01M 2004/021; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.06.2024 CN 202410839946**

(71) Applicants:
- **Zhuhai Guanqi New Material Co., Ltd.**
**Zhuhai Guangdong 519050 (CN)**
- **Zhuhai CosMX Battery Co., Ltd.**
**Zhuhai, Guangdong 519180 (CN)**

(72) Inventors:
- **ZENG, Jiajiang**
**Zhuhai, 519180 (CN)**
- **XIA, Dingguo**
**Zhuhai, 519180 (CN)**
- **LI, Suli**
**Zhuhai, 519180 (CN)**

(74) Representative: **Murgitroyd & Company**
**165-169 Scotland Street**
**Glasgow G5 8PL (GB)**

# (54) POSITIVE ELECTRODE PLATE AND LITHIUM-ION BATTERY

(57) Provided are a positive electrode plate and a lithium-ion battery. The positive electrode plate includes a positive electrode current collector and a positive electrode active layer located on at least part of a surface of the positive electrode current collector, where the positive electrode active layer sequentially includes a first positive electrode active layer and a second positive electrode active layer in a direction away from the positive electrode current collector. The positive electrode plate not only enables a lithium-ion battery to have excellent discharge capacity, but also has a relatively low internal resistance, which contributes to the realization of fast charging and extended cycle life of the battery.

EP 4 675 703 A1

## Description

### TECHNICAL FIELD

The present invention relates to an electrode plate, in particular to a positive electrode plate and a lithium-ion battery, which belong to the technical field of secondary batteries.

### BACKGROUND

High-voltage digital batteries are currently experiencing rapid development, with wide applications in the field of 3C digital products such as mobile phones, laptops, tablet computers, and mini-Bluetooth batteries, leading to increasingly high requirements for lithium-ion battery capacity. Currently, the primary approaches to improve battery capacity include increasing the charging voltage of a battery and increasing the amount of a positive electrode active material.

However, increased charging voltage induces crystal structure collapse in the positive electrode active material, leading to several issues, such as rapid capacity fade and significantly reduced cycling performance of batteries. Especially, when the battery is discharged at a high rate (not less than 0.7C), the discharge capacity and cycling performance will deteriorate even more markedly. Moreover, an increase in the amount of a positive electrode active material will increase the polarization of batteries.

Therefore, how to maintain the normal electrical performance of a lithium-ion battery while improving the capacity of the battery is a challenge during the research of consumer lithium-ion batteries.

### SUMMARY

The present invention provides a positive electrode plate. The positive electrode plate not only enables a lithium-ion battery to have excellent discharge capacity at a high rate, but also has a relatively low internal resistance, suppressing the occurrence of polarization and thus contributing to the realization of fast charging and extended cycle life of the battery.

The present invention further provides a battery including the positive electrode plate described above, which exhibits excellent discharge capacity, cycling performance, rate performance, etc.

The present invention provides a positive electrode plate, including a positive electrode current collector and a positive electrode active layer located on at least part of a surface of the positive electrode current collector, the positive electrode active layer includes a first positive electrode active layer and a second positive electrode active layer that are stacked in a direction away from the positive electrode current collector;

a first positive electrode active material in the first positive electrode active layer includes a first lithium metal oxide represented by formula 1 and/or a second lithium metal oxide represented by formula 2; and
a second positive electrode active material in the second positive electrode active layer includes a third lithium metal oxide represented by formula 3;
the first lithium metal oxide belongs to a Cmca space group of an orthorhombic crystal system;
the second lithium metal oxide belongs to a P63mc space group of a hexagonal crystal system;
the third lithium metal oxide C belongs to an R3-m space group of a trigonal crystal system;

$$Li_{n-y}Na_yCo_{c-a-b}M1_bM2_aO_2 \quad \text{formula 1,}$$

where in formula 1, $0.6 \leq n \leq 0.98$, $0 < y \leq 0.05$, $0 \leq a \leq 0.1$, $0 < b \leq 0.1$, $0.9 < c < 1.1$, and $0.95 < a + b + c < 1.15$; M1 includes at least one of Al, Mg, Ti, Zr, La or Y; M2 is a doping element different from M1, and M2 at least includes at least one of B, Te, W or K;

$$Li_{m-x}Na_xCo_{d-y1}D_{y1}O_2 \quad \text{formula 2,}$$

where in formula 2, $0.9 \leq m \leq 1.05$, $0 < x \leq 0.05$, $0 \leq y1 \leq 0.2$, $0.95 < d < 1.1$, $0.99 < d+y1 < 1.12$, and D includes at least one of Al, Mg, Ti, Zr, Ni, Mn, Y, La, Sr, W, Sc, Ce, P, Nb, V, Ta, Te, B or K; and

$$Li_eCo_fE_gO_2 \quad \text{formula 3,}$$

where in formula 3, $0.9 \leq e \leq 1.1$, $0.95 < f \leq 1.05$, $0 \leq g \leq 0.15$, $0.95 \leq f + g \leq 1.2$, and E includes at least one of Al, Mg, Ti, Zr, Ni, Mn, Y, La, Sr, W, Sc, Ce, P, Nb, V, Ta, Te, B or K.

For the positive electrode plate described above, an X-ray diffraction spectrum of the positive electrode active

layer includes a first diffraction peak and a second diffraction peak in a range of 2θ from 17.6° to 19.5°, and a 2θ difference between a first diffraction angle and a second diffraction angle ranges from 0.3° to 1.0°;
preferably, a intensity ratio of the second diffraction peak to the first diffraction peak is (1 - 5):1, and a 2θ of the second diffraction peak is greater than a 2θ of the first diffraction peak.

For the positive electrode plate described above, a half-cell including the positive electrode plate and a lithium metal negative electrode, after being charged to 4.55 V at a current rate of less than or equal to 0.1 C, then charged until a cut-off current of 0.025 C at a constant voltage, and further discharged to 3.0 V at a current rate of less than or equal to 0.1 C, has a capacity-voltage differential curve where the number N of discharge peaks in a range of from 3.0 V to 4.0 V is not less than 2, measured subsequent to discharging to 3.0 V.

For the positive electrode plate described above, the second positive electrode active material includes a spherical particle or a spheroidal particle;

a Dv50 of the first positive electrode active material ranges from 3 μm to 10 μm; and a Dv50 of the second positive electrode active material ranges from 14 μm to 20 μm; and
the Dv50 of the first positive electrode active material is less than the Dv50 of the second positive electrode material.

For the positive electrode plate described above, the first positive electrode active material includes a first crack inside, where an extension direction of the first crack forms an angle of less than 15° with a first direction, and the second positive electrode active material in the second positive electrode active layer includes a second crack inside, where an extension direction of the second crack forms an angle of less than 15° with the first direction;
preferably, a number of the first crack is greater than a number of the second crack.

For the positive electrode plate described above, a content of sodium element in the positive electrode active layer ranges from 20 ppm to 1000 ppm.

For the positive electrode plate described above, the positive electrode active layer includes sodium element, and a ratio of a content of sodium element in the first positive electrode active layer to a content of sodium element in the second positive electrode active layer is greater than 10.

For the positive electrode plate described above, a thickness ratio of the first positive electrode active layer to the second positive electrode active layer ranges from 1:1 to 1:5;
preferably, a thickness of the first positive electrode active layer is not less than 5 μm, and a total thickness of the positive electrode active layer is greater than 85 μm.

For the positive electrode plate as described above, a single-sided areal density of the positive electrode active layer is not less than 17 $mg/cm^2$; and/or

an internal resistance of the positive electrode plate is not greater than 0.4 kΩ*cm.
The present invention provides a lithium-ion secondary battery including the positive electrode plate described in any one of the above.

As for the positive electrode plate of the present invention, the positive electrode active layer includes a first positive electrode active layer and a second positive electrode active layer with special composition. With the special combination of the double-layer structure of the first positive electrode active material represented by formula 1 and/or formula 2 and the second positive electrode active material, the positive electrode plate has a lower internal resistance, which guarantees the rapid intercalation/deintercalation of lithium ions, thus considerably improving the rate performance and cycling performance of the battery.

## BRIEF DESCRIPTION OF THE DRAWINGS

FIG. 1 shows a schematic diagram of the direction of cracks in the positive electrode plate of the present invention;
FIG. 2 shows a single-sided CP-SEM image of the positive electrode plate in Example 1 of the present invention before rolling;
FIG. 3 shows an XRD spectrum of the positive electrode plate in Example 1 of the present invention;
FIG. 4 shows a differential capacity versus voltage curve of the half-cells in Example 1 and Comparative example 1 of the present invention; and
FIG. 5 shows a single-sided CP-SEM image of the positive electrode plate in Example 2 of the present invention.

## DETAILED DESCRIPTION OF THE EMBODIMENTS

In order to make the objects, technical solutions and advantages of the present invention clearer, the technical solutions in the examples of the present invention will be clearly and completely described below in conjunction with the examples of the invention. Apparently, the described examples are some, rather than all, of the examples of the invention. On the basis of the examples of the invention, all the other examples obtained by those of ordinary skill in the art without creative efforts fall within the scope of protection of the present invention.

A first aspect of the present invention provides a positive electrode plate including a positive electrode current collector and a positive electrode active layer located on at least part of a surface of the positive electrode current collector. The positive electrode active layer sequentially includes a first positive electrode active layer and a second positive electrode active layer in a direction away from the positive electrode current collector. A first positive electrode active material in the first positive electrode active layer includes a first lithium metal oxide represented by formula 1 and/or a second lithium metal oxide represented by formula 2; and a second positive electrode active material in the second positive electrode active layer includes a third lithium metal oxide represented by formula 3; where the first lithium metal oxide belongs to a Cmca space group of an orthorhombic crystal system; the second lithium metal oxide belongs to a P63mc space group of a hexagonal crystal system; the third lithium metal oxide C belongs to an R3-m space group of a trigonal crystal system;

$$Li_{n-y}Na_yCo_{c-a-b}M1_bM2_aO_2 \qquad \text{formula 1,}$$

where in formula 1, $0.6 \leq n \leq 0.98$ (for example, 0.6, 0.65, 0.7, 0.75, 0.8, 0.85, 0.9, 0.95 or 0.98), $0 < y \leq 0.05$ (for example, 0.01, 0.02, 0.03, 0.04 or 0.05), $0 \leq a \leq 0.1$ (for example, 0, 0.01, 0.02, 0.03, 0.04, 0.05, 0.06, 0.07, 0.08, 0.09 or 0.1), $0 < b \leq 0.1$ (for example, 0.01, 0.02, 0.03, 0.04, 0.05, 0.06, 0.07, 0.08, 0.09 or 0.1), $0.99 < c < 1.01$, and $0.95 < a + b + c < 1.15$ (for example, 0.96, 0.97, 0.98, 0.99, 1, 1.01, 1.02, 1.03, 1.04, 1.05, 1.06, 1.07, 1.08, 1.09, 1.1, 1.11, 1.12, 1.13 or 1.14); M1 includes at least one of Al, Mg, Ti, Zr, La or Y; M2 is a doping element different from M1, and M2 at least includes at least one of B, Te, W or K; and

$$Li_{m-x}Na_xCo_{d-y1}D_{y1}O_2 \qquad \text{formula 2,}$$

where in formula 2, $0.94 \leq m \leq 1.05$ (for example, 0.94, 0.95, 0.96, 0.97, 0.98, 0.99, 1, 1.01, 1.02, 1.03, 1.04 or 1.05), $0 < x \leq 0.05$ (for example, 0.01, 0.02, 0.03, 0.04 or 0.05), $0 \leq y1 \leq 0.2$ (for example, 0, 0.05, 0.1, 0.15 or 0.2), $0.95 < d < 1.01$ (for example, 0.96, 0.97, 0.98, 0.99 or 1), $0.99 < d + y1 < 1.12$ (for example, 1, 1.01, 1.02, 1.03, 1.04, 1.05, 1.06, 1.07, 1.08, 1.09, 1.1 or 1.11), and D includes at least one of Al, Mg, Ti, Zr, Ni, Mn, Y, La, Sr, W, Sc, Ce, P, Nb, V, Ta, Te, B or K.

In order to match with the first positive electrode active material described above, the second positive electrode active material includes a third lithium metal oxide, and the third lithium metal oxide C belongs to an R3-m space group of a trigonal crystal system.

$$Li_eCo_fE_gO_2 \qquad \text{Formula 3,}$$

In formula 3, $0.9 \leq e \leq 1.1$ (for example, 0.9, 0.95, 1, 1.05 or 1.1), $0.95 < f \leq 1.05$ (for example, 0.95, 0.96, 0.97, 0.98, 0.99, 1, 1.01, 1.02, 1.03, 1.04 or 1.05), $0 \leq g \leq 0.15$ (for example, 0, 0.01, 0.02, 0.03, 0.04, 0.05, 0.06, 0.07, 0.08, 0.09, 0.1, 0.11, 0.12, 0.13, 0.14 or 0.15), $0.95 \leq f + g \leq 1.2$ (for example, 0.95, 0.96, 0.97, 0.98, 0.99, 1, 1.05, 1.1, 1.15 or 1.2), and E includes at least one of Al, Mg, Ti, Zr, Ni, Mn, Y, La, Sr, W, Sc, Ce, P, Nb, V, Ta, Te, B or K.

It should be noted that the n and m in formula 1 and formula 2 are parameters related to the molar amount of lithium element in the first lithium metal oxide and the second lithium metal oxide, respectively.

The detection method for n and m is not limited in the present invention. For example, the positive electrode active material can be detected using an inductively coupled plasma (ICP) optical emission spectrometry; alternatively, when the positive electrode active material in the positive electrode plate is detected, the discharged battery is disassembled to remove the positive electrode plate, which is then soaked in dimethyl carbonate (DMC) for 1-3 h or rinsed with DMC, dried naturally in a drying room, and placed in a muffle furnace and roasted at 300-600°C for 2-5 h until the active layer is peeled off from the current collector, the resulting active layer is sieved with a 200 mesh sieve to obtain a powder to be tested, and then the metal element in the powder to be tested is detected by ICP to calculate the values of n and m.

The positive electrode plate of the present invention includes a positive electrode current collector and a positive electrode active layer provided on at least one functional surface of the positive electrode current collector, where the functional surface refers to a plane in the length and width directions of the current collector, with each current collector including two oppositely arranged functional surfaces. At least one functional surface of the positive electrode current collector includes a first positive electrode active layer and a second positive electrode active layer that are stacked, where the first positive electrode active layer is closer to the positive electrode current collector. Typically, the positive electrode

current collector is an aluminium foil or a composite aluminium foil with a thickness of 5-12 μm.

The positive electrode plate of the invention has a relatively low internal resistance, which contributes to improving the cycling performance and rate performance of the lithium-ion battery. The reason may be that the first positive electrode active material with the structure of formula 1 or formula 2 above has larger interlayer spacing, and the combination of the first positive electrode active material and the second positive electrode active material with a structure of formula 3 enables a smoother lithium-ion transport channel inside the positive electrode active layer, thereby improving the lithium-ion intercalation/deintercalation efficiency. Therefore, during the charge/discharge process, the electrode plate has a lower internal resistance and a higher electron conductivity, thus enabling the battery to exhibit excellent cycling performance and rate performance. In addition, the special double-layer structure also helps to reduce the polarization of the positive electrode plate and further reduce the internal resistance of the electrode plate, contributing to further improving the energy density of the lithium-ion battery under a high voltage.

In a specific embodiment, an X-ray diffraction spectrum of the positive electrode active layer includes a first diffraction peak and a second diffraction peak in a range of 2θ from 17.6° to 19.5°, and a 2θ difference between a first diffraction angle and a second diffraction angle ranges from 0.3° to 1.0° (for example, 0.3°, 0.4°, 0.5°, 0.6°, 0.7°, 0.8°, 0.9° or 1°). The inventors found that further controlling the proportion of the positive electrode active materials in the first positive electrode active layer and the second positive electrode active layer is conducive to the positive electrode active layer having the aforementioned diffraction features. In addition, the inventors have found that when the positive electrode plate including the first positive electrode active material and the second positive electrode active material has the aforementioned diffraction features, the lithium-ion intercalation/deintercalation resistance is lower, which is conducive to further reducing the polarization of the battery. It should be noted that the difference herein refers to an absolute value.

Further, a 2θ of the second diffraction peak is greater than a 2θ of the first diffraction peak, and a intensity ratio of the second diffraction peak to the first diffraction peak ranges from 1 to 5.

In detail, the 2θ at which the second diffraction peak appears is greater than the 2θ at which the first diffraction peak appears, and the peak intensity P2 of the second diffraction peak is not lower than the peak intensity P1 of the first diffraction peak, and P2/P1 is (1-5) : 1. In this case, the internal crystal phase structures of both the first positive electrode active material and the second positive electrode active material can support one another, thereby further exhibiting a higher material stability. The reduced resistance of the lithium-ion intercalation/deintercalation channel is conducive to obtaining a positive electrode plate with a lower internal resistance. Furthermore, the positive electrode plate also has superior voltage resistance, allowing for an appropriate increase in charging voltage to improve the discharge capacity of the battery and the ionic conduction efficiency of lithium ions.

In addition, a half-cell including the positive electrode plate and a lithium metal negative electrode, after being charged to 4.55 V at a current rate of less than or equal to 0.1 C, then charged until a cut-off current of 0.025 C at a constant voltage, and further discharged to 3.0 V at a current rate of less than or equal to 0.1 C, has a capacity-voltage differential curve where the number N of discharge peaks in a range of from 3.0 V to 4.0 V is not less than 2, measured subsequent to discharging to 3.0 V.

During the charge/discharge process described above, as long as both the charge rate and discharge rate of the half-cell do not exceed 0.1C, the number of discharge peaks in the range of 3.0-4.0 V on a differential capacity versus voltage curve of the battery is not less than 2. It should be noted that the battery mentioned above refers to a battery with the number of cycles not exceeding 10, and the electrolyte in the battery mentioned above is not particularly limited in the present invention. In addition, after charging is completed, it is necessary to leave the cell to stand for 3 min before the discharging operation described above.

Specifically, the differential capacity versus voltage curve is obtained by differentiating the capacity versus voltage for the charge/discharge curves of the battery. In detail, the differential capacity versus voltage curve includes a charging differential capacity versus voltage curve and a discharging differential capacity versus voltage curve, and the aforementioned discharge peaks are positioned on the discharging differential capacity versus voltage curve. During the charge/discharge process of the battery, neither the charge rate nor the discharge rate exceeds 0.1C, and the two can be the same or different.

The inventors found that when the positive electrode plate of the present invention is applied to a lithium-ion battery, the lithium-ion battery can release more capacity as the charging voltage increases, and the discharge capacity of the lithium-ion battery remains stable as the number of charge/discharge cycles increases and the discharge rate increases. The number of the discharge peaks correlates with the energy required for lithium intercalation/deintercalation and the reversibility of the material. For the positive electrode plate of the present invention, a greater number of discharge peaks in the range of 3.0-4.0 V indicates a lower lithium-ion transport resistance of the double-layer structure of the special materials in the positive electrode plate of the present invention, enabling the positive electrode plate to have a lower delithiation potential at a low voltage. In this way, the positive electrode plate of the present invention requires lower energy during lithium intercalation/deintercalation; moreover, the reversibility of the material can be improved. Therefore, with the same voltage, the positive electrode plate of the present invention exhibits easy lithium intercalation/deintercalation, and thus a higher capacity and better cycling performance and rate performance.

It can be understood that the positive electrode plate in the half-cell described above is a single-sided positive electrode plate, i.e., a positive electrode active layer is only provided on one functional surface of the positive electrode current collector.

In addition, the half-cell described above can also be prepared by disassembling a lithium-ion battery including the positive electrode plate of the present invention. Specifically, a lithium-ion battery including the positive electrode plate of the present invention and having the number of cycles not exceeding 10 is selected and discharged to 3.0 V at a current which is 1/10 of the nominal capacity, and then the voltage of the battery is measured to verify that the voltage of the battery is 3.0-3.6 V; then, the lithium-ion battery is disassembled to remove the positive electrode plate, which is then soaked in dimethyl carbonate (DMC) for 3 h and baked in an oven at a temperature of lower than 100°C for 12 h until the solvent is volatilized completely; and the resulting single-sided positive electrode plate is used to assemble the corresponding half-cell.

In a specific embodiment, a Dv50 of the first positive electrode active material ranges from 3 μm to 10 μm (for example, 3 μm, 4 μm, 5 μm, 6 μm, 7 μm, 8 μm, 9 μm or 10 μm); and a particle size Dv50 of the second positive electrode active material ranges from 14 μm to 20 μm (for example, 14 μm, 15 μm, 16 μm, 17 μm, 18 μm, 19 μm or 20 μm). The Dv50 referred to herein is the particle size at which the cumulative volume reaches 50% of the total volume of all the second positive electrode active materials.

When the positive electrode plate includes the structure described above, the side reaction of the positive electrode plate with electrolyte can be reduced, which not only extends the cycle life of the battery, but also helps to ensure the safety performance during the long cycle process of the battery; furthermore, during the rolling process of the positive electrode plate, the structure described above can allow the effective use of the pressure applied during rolling, such that with the areal density guaranteed, the crushing and collapse of the positive electrode active material can be avoided, and channels conducive to the transport of lithium ions can easily appear inside the positive electrode active material, thus guaranteeing the cycling performance and rate performance of the battery.

Further, the Dv50 of the first positive electrode active material is less than the Dv50 of the second positive electrode material. This further contributes to the wettability of the positive electrode plate by the electrolyte, thereby reducing lithium-ion migration resistance and further improving the cycling performance and rate performance.

In a specific embodiment, the first positive electrode active material is a bulk material, and the second positive electrode active material in the second positive electrode active layer is spherical or spheroidal. In detail, the first positive electrode active material and the second positive electrode active material have different morphologies. Specifically, the first positive electrode active material is a bulk material, i.e., both the length-to-thickness and width-to-thickness ratios of the first positive electrode active material are greater than 1.

Further, the first positive electrode active material includes a first crack inside, where an extension direction of the first crack forms an angle of less than 15° with a first direction, and the second positive electrode active material includes a second crack inside, where an extension direction of the second crack forms an angle of less than 15° with the first direction. Here, the first direction is length direction of the positive electrode current collector.

The first and second cracks with special angles described above show apparently regular orientation and can act as the transport channels for lithium ions to realize the charge/discharge operation.

Still further, a number of the first crack can be controlled to be greater than a number of the second crack. The reason is that since the first crack is present in the first positive electrode active layer that is away from the electrolyte, the first positive electrode active layer having more first cracks allows more lithium ions in the first positive electrode active layer to participate in intercalation/deintercalation, which improves the capacity per gram and cycling performance of the battery.

With FIG. 1 as an example, the positive electrode plate in FIG. 1 includes a first positive electrode active layer and a second positive electrode active layer provided on one functional surface of an aluminium foil layer, where the first crack in the first positive electrode active layer is substantially parallel to the length direction of the aluminium foil layer (i.e., the included angle is 0°), and the second positive electrode active layer includes a second crack with an included angle less than 15° relative to the length direction of the aluminium foil layer, and a third crack with an included angle greater than 15° relatively to the length direction of the aluminium foil layer. Apparently, the number of the first cracks is greater than the number of the second cracks.

Specifically, cross-section polishing (CP) technology can be used for processing, followed by an SEM imaging test for observation (CP-SEM). It should be noted that a positive electrode plate satisfying the aforementioned relationship between the number of first cracks and the number of second cracks refers to a positive electrode plate that has not been assembled into a battery after rolling, or a positive electrode plate in a lithium-ion battery with the number of cycles not exceeding 10.

In addition, the present invention further defines the content of sodium element in the positive electrode active layer in the positive electrode plate. Specifically, a total content of sodium element in the positive electrode active layer ranges from 20 ppm to 1000 ppm (for example, 20 ppm, 30 ppm, 40 ppm, 50 ppm, 60 ppm, 70 ppm, 80 ppm, 90 ppm, 100 ppm, 200 ppm, 300 ppm, 400 ppm, 500 ppm, 600 ppm, 700 ppm, 800 ppm, 900 ppm or 1000 ppm). For example, when both

functional surfaces of the positive electrode plate include a first positive electrode active layer and a second positive electrode active layer that are stacked, the total sodium content of all the active layers on both functional surfaces is 20-1,000 ppm.

Since the radius of sodium ions is greater than that of lithium ions, the sodium ions in the positive electrode active layer play a support role in the material structure, which can significantly improve lithium-ion intercalation/deintercalation, thereby improving the cycling performance.

In a specific embodiment, when the positive electrode plate has the structure described above, i.e., includes the first positive electrode active layer and the second positive electrode active layer described above, a ratio of a content of sodium element in the first positive electrode active layer to a content of sodium element in the second positive electrode active layer is greater than 10. In this case, the Na element content in the first positive electrode active layer is higher than that in the second positive electrode active layer, indicating that the first positive electrode active material has better lithium-ion intercalation/deintercalation channels than the second positive electrode active material, which is more conducive to the free lithium intercalation/deintercalation in the charge/discharge process, thus improving the cycling performance to some extent, reducing the polarization of the electrode plate, and improve the rate performance.

The source of the sodium element in the positive electrode active layer is not limited in the present invention, for example, the sodium element may be sourced from a positive electrode active material, a dispersant, a binder, etc.

Further, a thickness ratio of the first positive electrode active layer to the second positive electrode active layer ranges from 1:1 to 1:5 (for example, 1:1, 1:2, 1:3, 1:4 or 1:5).

When the first positive electrode active layer and the second positive electrode active layer have the chemical composition described above, and the thickness ratio of the two also satisfies 1 : 1 - 1 : 5, it helps to further reduce the internal resistance of the positive electrode plate. Even if the energy density of a battery is increased by increasing the thickness of the positive electrode active layer or the areal density of the positive electrode plate, the ion conductivity of lithium ions will not be affected, which helps to maintain the cycling performance and rate performance of the battery.

Further, a thickness of the first positive electrode active layer is not less than 5 μm. In the prior art, in order to reduce the lithium-ion migration resistance, the thickness of an active layer is often controlled to avoid hindered lithium-ion migration due to excessive thickness. However, the inventors have found that when the positive electrode plate of the invention includes a first positive electrode active material and a second positive electrode active material, due to the mutual cooperation between the first positive electrode active material and the second positive electrode active material, as the thickness of the first active layer increases, not only the energy density of the battery increases, but also the cycling performance and rate performance of the lithium-ion battery is further guaranteed.

In a specific embodiment, a total thickness of the positive electrode active layer is greater than 85 μm, which provides battery with more positive electrode active material to participate in lithium-ion intercalation/deintercalation. The total thickness of the positive electrode active layer herein refers to the sum of the thicknesses of the first positive electrode active layer and the second positive electrode active layer.

Further, in order to achieve better energy density of a lithium-ion battery, the total thickness of the positive electrode active layer can be controlled from 85 μm to 150 μm (for example, 85 μm, 90 μm, 100 μm, 110 μm, 120 μm, 130 μm, 140 μm or 150 μm).

In a specific embodiment of the present invention, a single-sided areal density of the positive electrode active layer is not less than 17 mg/cm$^2$; and an internal resistance of the positive electrode plate is not greater than 0.4 kΩ*cm. The single-sided areal density of the positive electrode active layer mentioned above refers to the areal density of a positive electrode active layer on each functional surface of the positive electrode current collector.

The positive electrode active layer of the positive electrode plate of the present invention has a single-sided areal density of not less than 17 mg/cm$^2$. Thus, more positive electrode active material will participate in lithium-ion intercalation/deintercalation per unit time, enabling a lithium-ion battery including the positive electrode plate to have an advantage in discharge capacity. Furthermore, the internal resistance of the positive electrode plate of the invention is not higher than 0.4 kΩ*cm, such that the resistance to lithium-ion intercalation/deintercalation is lower, and the intercalation/deintercalation pathway is smoother, without the occurrence of severe polarization, thus guaranteeing the rate performance and cycling performance of the lithium-ion battery.

It can be understood that the positive electrode active layer further includes a conductive agent and a binder in addition to a positive electrode active material. For example, the positive electrode active layer includes, in percentage by mass, 70-99 wt% of a positive electrode active material, 0.5-15 wt% of a conductive agent, and 0.5-15 wt% of a binder, further, 80-98 wt% of a positive electrode active material, 1-10 wt% of a conductive agent, and 1-10 wt% of a binder.

The choice of the conductive agent and the binder is not particularly limited, and those conventional in the art can be selected. For example, the conductive agent is selected from at least one of conductive carbon black, acetylene black, Ketjen black, conductive graphite, conductive carbon fibre, carbon nanotube, single-walled carbon nanotube, multi-walled carbon nanotube and carbon fibre, and the binder is selected from at least one of polyvinylidene fluoride (PVDF), polytetrafluoroethylene (PTFE) and lithium polyacrylate (PAALi).

Further, a safety layer may be provided between the positive electrode active layer and the current collector to

improve the safety performance. The material of the safety layer is typically a non-conductive safety material, for example, an iron-containing compound (such as lithium iron phosphate and iron phosphate), an aluminium-containing compound (such as ceramic alumina), etc. Of course, the safety layer also includes a binder, and the proportions of the binder and the safety material may be further determined according to specific requirements.

Further, when a compacted density of the positive electrode plate is not less than 3.5 $g/cm^3$, the cycling performance and capacity of the battery can be further improved.

A second aspect of the present invention also provides a lithium-ion battery, which includes the positive electrode plate described above and thus has outstanding cycling performance, rate performance, and specific capacity.

The specific structure of the lithium-ion battery is not limited in the present invention. For example, the lithium-ion battery may be a prismatic battery, a cylindrical battery, etc.

According to the present invention, the lithium-ion battery further includes a negative electrode plate, a separator, and an electrolyte.

For example, a conventional electrolyte of an electrolyte lithium salt and a solvent is used, the solvent containing ethylene carbonate (abbreviated to EC), diethyl carbonate (abbreviated to DEC), propylene carbonate (abbreviated to PC), and fluoroethylene carbonate (abbreviated to FEC). Further, an additive represented by formula T is also included.

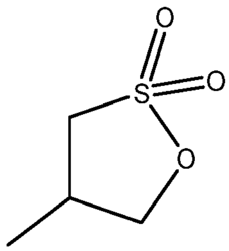

Formula T.

**In** a specific embodiment, when the electrolyte includes, in percentage by mass, 5-10% of an additive represented by formula T above, with the system of the positive electrode active material described above, the additive enables the non-lithium salt component in the electrolyte to preferentially form an SEI film on the negative electrode and can improve the stability of the SEI film to some extent, thus enabling the lithium-ion battery to have improved cycling performance and rate performance.

Further, the electrolyte described above includes, in percentage by mass: 4-20% of fluoroethylene carbonate, 10-30% of lithium hexafluorophosphate, and 2-10% of an additive. In this case, the lithium-ion battery exhibits outstanding cycling performance and rate performance.

For example, the negative electrode plate includes a negative electrode current collector and a negative electrode active layer provided on at least one functional surface of the negative electrode current collector. Here, the negative electrode active layer includes a negative electrode active material, a conductive agent, and a binder. In a specific embodiment, the negative electrode active layer includes, in percentage by mass, 70-99 wt% of a negative electrode active material, 0.5-15 wt% of a conductive agent, and 0.5-15 wt% of a binder, further, 80-98 wt% of a negative electrode active material, 1-10 wt% of a conductive agent, and 1-10 wt% of a binder. Here, the negative electrode active material is selected from one or more of artificial graphite, natural graphite, hard carbon, mesocarbon microspheres, lithium titanate, a silicon-carbon material, and silicon monoxide. Further, the negative electrode plate may also be a lithium metal negative electrode including lithium metal, which is conducive to providing the battery with more lithium source, where the lithium metal may be provided on the surface of the negative electrode active layer that is away from the current collector, or a lithium foil is directly used as the negative electrode plate. In detail, when the first positive electrode active material of formula 1 described above is included, a negative electrode plate containing lithium metal is preferred, which is conducive to improving lithium intercalation/deintercalation and the lithium transport of the first positive electrode active material.

For example, the separator is a material with polypropylene as a substrate, or on this basis, an adhesive-coated separator with one or both surfaces coated with ceramic.

The lithium-ion battery of the present invention is suitable for a high-voltage system, and such a lithium-ion battery with good rate performance and cycling stability and a higher capacity per gram at a higher voltage such as 4.50 V can meet the usage requirements for light and thin high-end digital products.

The present invention will be further described below in conjunction with specific examples.

Example 1

The preparation method for the positive electrode plate in this example included the following steps:

1) A first metal oxide numbered A1, a conductive agent SP, and a binder PVDF-900 were mixed in a mass ratio of 97% :

1.5% : 1.5%, and the mixture was dispersed in NMP and stirred in a double planetary mixer to obtain a first active material layer slurry. The first active material layer slurry was applied onto both functional surfaces of an aluminium foil current collector with a thickness of 10 μm and then dried, with the thickness of the single-sided coating layer being about 15 μm, to obtain a positive electrode plate containing the first active material layer.

2) A third metal oxide numbered C1, PVDF, and carbon nanotubes were mixed in a mass ratio of 97% : 1.5% : 1.5%, and the mixture was dispersed in NMP and stirred in a double planetary mixer to obtain a second active material layer slurry. The second active material layer slurry was applied onto the surface of a first active material layer that is away from the positive electrode current collector and then dried, with the thickness of the single-sided coating layer being about 40 μm. FIG. 2 shows a single-sided CP-SEM image of the positive electrode plate in Example 1 of the present invention before rolling.

3) The dried electrode plate in step 2) was rolled in such a way that the single-sided compacted density was 4.05 g/cm$^3$ to obtain a positive electrode plate, which had a total thickness of 102 μm, a thickness ratio H of the first positive electrode active layer to the second positive electrode active layer being 3 : 8, the thickness of the positive electrode active layer being 92 μm, and an areal density of 18.64 mg/cm$^2$.

The specific parameters of the positive electrode plate in this example were shown in Tables 1 and 2.

4) Graphite as a negative electrode active material, styrene-butadiene rubber (SBR), sodium carboxymethyl cellulose, and conductive carbon black were mixed in a weight ratio of 94.5% : 3% : 2% : 0.5%, and the mixture was dispersed in water and stirred in a double planetary mixer to obtain a negative electrode slurry. The negative electrode slurry was applied onto the surfaces on both sides of a copper foil current collector, followed by rolling and drying to obtain a negative electrode plate for later use.

Examples 2-11

The preparation methods in Examples 2-11 were substantially the same as that in Example 1, and the specific parameters of the positive electrode plates were shown in Tables 1 and 2. The parameters not shown were the same as those in Example 1.

Examples 12-13

The preparation methods in Examples 12-13 were substantially the same as that in Example 5, except that the thickness ratio of the positive electrode active layers was different, and the specific parameters of the positive electrode plates were shown in Tables 1 and 2. The parameters not shown were the same as those in Example 1.

Examples 14-15

The preparation methods in Examples 14-15 were substantially the same as that in Example 2, except that the chemical composition of the first positive electrode active layers was different, and the specific parameters of the positive electrode plates were shown in Tables 1 and 2. The parameters not shown were the same as those in Example 1.

Comparative examples 1-2

The preparation methods in Comparative examples 1-2 were the same as that in Example 1, except that the step (1) was omitted, and the specific parameters of the positive electrode plates were shown in Tables 1 and 2. The parameters not shown were the same as those in Example 1.

Comparative examples 3-4

The preparation methods in Comparative examples 3-4 were the same as that in Example 1, except that the step (2) was omitted, and the specific parameters of the positive electrode plates were shown in Tables 1 and 2. In addition, the negative electrode plate in Comparative example 3 further included a lithium foil with an areal density of 0.5 mg/cm$^2$ rolled on the surface of the negative electrode active layer that was away from the current collector, and finally, a negative electrode plate containing lithium metal was obtained. The parameters not shown were the same as those in Example 1.

In Table 1, the number of the first cracks in all the first positive electrode active materials was greater than the number of the second cracks in the second positive electrode active materials.

Table 1

| | First positive electrode active layer | | | Second positive electrode active layer | | |
|---|---|---|---|---|---|---|
| | No. | First positive electrode active material: Chemical formula/Dv50 (μm) | First positive electrode active material: Space group | No. | Second positive electrode active material: Chemical formula/Dv50 (μm) | Space group |
| Example 1 | A1 | $Li_{0.723}Na_{0.015}Co_{0.97}Al_{0.02}B_{0.01}O_2$ /7.85 | Cmca | C1 | $Li_{1.001}Co_{0.963}Al_{0.03}Mg_{0.004}Ti_{0.003}O_2$/15.71 | R3-m |
| Example 2 | A1 | $Li_{0.723}Na_{0.015}Co_{0.97}Al_{0.02}B_{0.01}O_2$ /7.85 | Cmca | C1 | $Li_{1.001}Co_{0.963}Al_{0.03}Mg_{0.004}Ti_{0.003}O_2$/15.71 | R3-m |
| Example 3 | A1 | $Li_{0.723}Na_{0.015}Co_{0.97}Al_{0.02}B_{0.01}O_2$ /7.85 | Cmca | C1 | $Li_{1.001}Co_{0.963}Al_{0.03}Mg_{0.004}Ti_{0.003}O_2$/15.71 | R3-m |
| Example 4 | A2 | $Li_{0.742}Na_{0.0125}Co_{0.968}Al_{0.023}Te_{0.0\ 09}O_2$/4.86 | Cmca | C1 | $Li_{1.001}Co_{0.963}Al_{0.03}Mg_{0.004}Ti_{0.003}O_2$/15.71 | R3-m |
| Example 5 | A1 | $Li_{0.723}Na_{0.015}Co_{0.97}Al_{0.02}B_{0.01}O_2$ /7.85 | Cmca | C1 | $Li_{1.001}Co_{0.963}Al_{0.03}Mg_{0.004}Ti_{0.003}O_2$/15.71 | R3-m |
| Example 6 | A1 | $Li_{0.723}Na_{0.015}Co_{0.97}Al_{0.02}B_{0.01}O_2$ /7.85 | Cmca | C2 | $Li_{1.01}Co_{0.96}Al_{0.033}Mg_{0.004}La_{0.003}O_2$/16.12 | R3-m |
| Example 7 | B1 | $Li_{0.989}Na_{0.012}Co_{0.965}Al_{0.03}B_{0.005}O_2$/4.33 | P63mc | C1 | $Li_{1.001}Co_{0.963}Al_{0.03}Mg_{0.004}Ti_{0.003}O_2$/15.71 | R3-m |
| Example 8 | B1 | $Li_{0.989}Na_{0.012}Co_{0.965}Al_{0.03}B_{0.005}O_2$/4.33 | P63mc | C1 | $Li_{1.001}Co_{0.963}Al_{0.03}Mg_{0.004}Ti_{0.003}O_2$/15.71 | R3-m |
| Example 9 | B1 | $Li_{0.989}Na_{0.012}Co_{0.965}Al_{0.03}B_{0.005}O_2$/4.33 | P63mc | C3 | $Li_{1.005}Co_{0.954}Al_{0.035}Mg_{0.007}La_{0.00\ 4}O_2$/15.95 | R3-m |
| Example 10 | B2 | $Li_{0.98}Na_{0.008}Co_{0.968}Al_{0.028}K_{0.004}O_2$/4.67 | P63mc | C1 | $Li_{1.001}Co_{0.963}Al_{0.03}Mg_{0.004}Ti_{0.003}O_2$/15.71 | R3-m |
| Example 11 | B2 | $Li_{0.98}Na_{0.008}Co_{0.958}Al_{0.028}K_{0.004}O_2$/4.67 | P63mc | C1 | $Li_{1.001}Co_{0.963}Al_{0.03}Mg_{0.004}Ti_{0.003}O_2$/15.71 | R3-m |
| Example 12 | A1 | $Li_{0.723}Na_{0.015}Co_{0.97}Al_{0.02}B_{0.01}O_2$ /7.85 | Cmca | C1 | $Li_{1.001}Co_{0.963}Al_{0.03}Mg_{0.004}Ti_{0.003}O_2$/15.71 | R3-m |
| Example 13 | A1 | $Li_{0.723}Na_{0.015}Co_{0.97}Al_{0.02}B_{0.01}O_2$ /7.85 | Cmca | C1 | $Li_{1.001}Co_{0.963}Al_{0.03}Mg_{0.004}Ti_{0.003}O_2$/15.71 | R3-m |
| Example 14 | A3 | $Li_{0.674}Na_{0.043}Co_{0.97}Al_{0.02}B_{0.01}O_2$ /5.71 | Cmca | C1 | $Li_{1.001}Co_{0.963}Al_{0.03}Mg_{0.004}Ti_{0.003}O_2$/15.71 | R3-m |
| Example 15 | A4 | $Li_{0.734}Na_{0.004}Co_{0.97}Al_{0.02}B_{0.01}O_2$ /6.14 | Cmca | C1 | $Li_{1.001}Co_{0.963}Al_{0.03}Mg_{0.004}Ti_{0.003}O_2$/15.71 | R3-m |
| Comparative example 1 | / | / | / | C1 | $Li_{1.001}Co_{0.963}Al_{0.03}Mg_{0.004}Ti_{0.003}O_2$/15.71 | R3-m |
| Comparative example 2 | / | / | / | C1 | $Li_{1.001}Co_{0.963}Al_{0.03}Mg_{0.004}Ti_{0.003}O_2$/15.71 | R3-m |
| Comparative example 3 | A1 | $Li_{0.723}Na_{0.015}Co_{0.97}Al_{0.02}B_{0.01}O_2$ /7.85 | Cmca | / | / | / |
| Comparative example 4 | B1 | $Li_{0.989}Na_{0.012}Co_{0.965}Al_{0.03}B_{0.005}O_2$/4.33 | P63mc | / | / | / |

Table 2

| | First positive electrode active layer | | | Second positive electrode active layer | | Positive electrode active layer | | |
|---|---|---|---|---|---|---|---|---|
| | No. | Mass fraction of first positive electrode active material/ % | Thickness before rolling/μm | No. | Thickness before rolling/μm | Compacted density of single-sided positive electrode active layer/g/cm$^3$ | Total thickness of electrode plate after rolling/μm | H |
| Example 1 | A1 | 97% | 15 | C1 | 40 | 4.05 | 102 | 3:8 |
| Example 2 | A1 | 97% | 20 | C1 | 40 | 4.08 | 106 | 1:2 |
| Example 3 | A1 | 97% | 15 | C1 | 35 | 4 | 101 | 3:7 |
| Example 4 | A2 | 97% | 15 | C1 | 40 | 4.05 | 102 | 3:8 |
| Example 5 | A1 | 96.50% | 20 | C1 | 40 | 4.03 | 102 | 1:2 |
| Example 6 | A1 | 97% | 15 | C2 | 40 | 4.05 | 102 | 3:8 |
| Example 7 | B1 | 97% | 15 | C1 | 40 | 4.05 | 102 | 3:8 |
| Example 8 | B1 | 97% | 20 | C1 | 40 | 4.08 | 106 | 1:2 |
| Example 9 | B1 | 97% | 20 | C3 | 40 | 4.08 | 106 | 1:2 |
| Example 10 | B2 | 97% | 15 | C1 | 40 | 4.05 | 102 | 3:8 |
| Example 11 | B2 | 96% | 22 | C1 | 40 | 4.05 | 103 | 3:8 |
| Example 12 | A1 | 96.50% | 40 | C1 | 20 | 4 | 105 | 2:1 |
| Example 13 | A1 | 96.50% | 30 | C1 | 30 | 4.01 | 104 | 1:1 |
| Example 14 | A3 | 97% | 20 | C1 | 40 | 4.08 | 106 | 1:2 |
| Example 15 | A4 | 97% | 20 | C1 | 40 | 4.08 | 106 | 1:2 |
| Comparative example 1 | / | / | / | C1 | 40 | 4.05 | 78 | / |
| Comparative Example 2 | / | / | / | C1 | 55 | 4.06 | 101 | / |
| Comparative Example 3 | A1 | 0.97 | 55 | / | / | 4.06 | 101 | / |
| Comparative Example 4 | B1 | 0.97 | 55 | / | / | 4.06 | 101 | / |

Test example 1

The areal density, the total thickness of the positive electrode active layer, and the internal resistance of the positive electrode plates in the examples and comparative examples were tested. The results are shown in Table 3.

Here,

test method of areal density: first, a positive electrode plate was visually inspected to confirm that the appearance of the electrode plate was complete, without issues such as material defects or electrolyte residues; then, the double-sided electrode plate was subjected to multiple punching operations using a punch die with a diameter of 18 mm; 5 pcs of punched plates with holes at different positions were selected and weighed respectively to obtain the weight of the corresponding electrode plate; and the areal density of the weighed electrode plate was respectively calculated according to the area of the electrode plate, followed by averaging to obtain the areal density of the electrode plate.

Total thickness of positive electrode active layer: the thickness of the positive electrode plate was measured using a ten-thousandth micrometre, and then the thickness of the positive electrode current collector was subtracted to

obtain the total thickness of the positive electrode active layer.

Test method of internal resistance of electrode plate: first, a positive electrode plate was inspected to confirm that the appearance of the electrode plate was complete, without issues such as material defects or electrolyte residues; and then, the electrode plate was placed flat on a multifunctional digital four-probe tester to measure the resistance of the electrode plate. The results are shown in Table 3.

Table 3

| No. | Areal density of positive electrode active layer ($mg/cm^2$) | Total thickness of positive electrode active layer/$\mu$m | Internal resistance of electrode plate (k$\Omega$*cm) |
|---|---|---|---|
| Example 1 | 18.64 | 92 | 0.2842 |
| Example 2 | 19.58 | 96 | 0.3012 |
| Example 3 | 18.21 | 91 | 0.2794 |
| Example 4 | 18.48 | 92 | 0.2874 |
| Example 5 | 18.54 | 92 | 0.2737 |
| Example 6 | 18.37 | 92 | 0.2891 |
| Example 7 | 18.43 | 92 | 0.2806 |
| Example 8 | 19.61 | 96 | 0.2996 |
| Example 9 | 19.59 | 96 | 0.3002 |
| Example 10 | 18.52 | 92 | 0.2799 |
| Example 11 | 18.37 | 93 | 0.2895 |
| Example 12 | 19.03 | 95 | 0.2993 |
| Example 13 | 18.89 | 94 | 0.2911 |
| Example 14 | 19.79 | 96 | 0.3281 |
| Example 15 | 19.67 | 96 | 0.2819 |
| Comparative example 1 | 13.73 | 68 | 0.2677 |
| Comparative Example 2 | 18.39 | 91 | 0.4371 |
| Comparative Example 3 | 18.38 | 91 | 0.4474 |
| Comparative Example 4 | 18.34 | 91 | 0.4289 |

Test Example 2

The positive electrode plates in the examples and comparative examples were tested by means of XRD, and the specific experimental method was as follows:

The positive electrode plates in the examples and comparative examples were respectively wound with a negative electrode plate to obtain a jelly roll, which was then packaged in an aluminium plastic bag; and electrolyte was then injected, followed by hot-pressing and formation to obtain a lithium-ion battery, the measured capacity of which was 4,000 mAh. Here, the negative electrode plate included a copper foil and a negative electrode active layer provided on both sides of the copper foil. The negative electrode active layer included, in percentage by mass, 94.5% of graphite, 3% of styrene-butadiene rubber (SBR), 2% of sodium carboxymethyl cellulose, and 0.5% of a conductive carbon black. As for the electrolyte, ethylene carbonate (abbreviated to EC), diethyl carbonate (abbreviated to DEC), propylene carbonate (abbreviated to PC), and ethyl methyl carbonate (EMC) were mixed in a mass ratio of 3 : 6 : 2 : 9, and then fluoroethylene carbonate (abbreviated to FEC) in an amount of 6% of the total mass of the electrolyte, lithium hexafluorophosphate (abbreviated to $LiPF_6$) in an amount of 13% of the total mass of the electrolyte, and an additive represented by formula T were added, with the content of the additive being 2% of the total electrolyte content.

The lithium-ion battery was discharged to 3.0 V at a current that was 1/10 of the nominal capacity, and the voltage of the battery was measured to verify that the voltage was 3.0-3.6 V; then the lithium-ion battery was disassembled to remove the positive electrode plate; the positive electrode plate was soaked in dimethyl carbonate (DMC) for 3 h and dried naturally in a drying room; the positive electrode plate was then tested by means of XRD with a scanning angle in a range of

10-90°, and the 2θ of the first diffraction peak and the second diffraction peak in a range of 17.6°-19.5° and the difference of 2θ were determined. The results are shown in Table 4. FIG. 3 shows an XRD spectrum of the positive electrode plate in Example 1 of the present invention.

Table 4

| No. | 2θ of first diffraction peak (°) | 2θ of second diffraction peak (°) | 2θ difference between second diffraction peak and first diffraction peak (°) | Intensity ratio of second diffraction peak to first diffraction peak |
|---|---|---|---|---|
| Example 1 | 18.1211 | 19.027 | 0.9059 | 2.56 |
| Example 2 | 18.0685 | 18.922 | 0.8535 | 2.10 |
| Example 3 | 18.0948 | 18.9089 | 0.8141 | 2.38 |
| Example 4 | 18.0029 | 18.9876 | 0.9847 | 2.81 |
| Example 5 | 18.0423 | 18.9614 | 0.9191 | 2.05 |
| Example 6 | 18.0554 | 19.0139 | 0.9585 | 2.71 |
| Example 7 | 18.5806 | 18.9876 | 0.407 | 2.69 |
| Example 8 | 18.5806 | 18.9089 | 0.3283 | 1.99 |
| Example 9 | 18.5937 | 19.027 | 0.4333 | 2.20 |
| Example 10 | 18.5543 | 18.9876 | 0.4333 | 2.79 |
| Example 11 | 18.5675 | 18.922 | 0.3545 | 2.91 |
| Example 12 | 18.0554 | 18.9745 | 0.9191 | 0.46 |
| Example 13 | 18.0554 | 18.9614 | 0.906 | 0.99 |
| Example 14 | 18.0554 | 18.9089 | 0.8535 | 1.91 |
| Example 15 | 18.0685 | 18.9351 | 0.8535 | 2.04 |
| Comparative example 1 | / | 18.9614 | / | / |
| Comparative Example 2 | / | 18.8957 | / | / |
| Comparative Example 3 | 18.0554 | / | / | / |
| Comparative Example 4 | 18.5937 | / | / | / |

Test Example 3

The positive electrode plates in the examples and comparative examples were respectively wound with a negative electrode plate to obtain a jelly roll, which was then packaged in an aluminium plastic bag; and electrolyte was then injected, followed by hot-pressing and formation to obtain a lithium-ion battery, the measured capacity of which was 4,000 mAh. Here, the negative electrode plate included a copper foil and a negative electrode active layer provided on both sides of the copper foil. The negative electrode active layer included, in percentage by mass, 94.5% of graphite, 3% of styrene-butadiene rubber (SBR), 2% of sodium carboxymethyl cellulose, and 0.5% of a conductive carbon black. As for the electrolyte, ethylene carbonate (abbreviated to EC), diethyl carbonate (abbreviated to DEC), propylene carbonate (abbreviated to PC), and ethyl methyl carbonate (EMC) were mixed in a mass ratio of 3 : 6 : 2 : 9, and then fluoroethylene carbonate (abbreviated to FEC) in an amount of 6% of the total mass of the electrolyte, lithium hexafluorophosphate (abbreviated to $LiPF_6$) in an amount of 13% of the total mass of the electrolyte, and an additive represented by formula T were added, with the content of the additive being 2% of the total electrolyte content.

The lithium-ion battery was subjected to the following tests.

1) Total content of sodium element in positive electrode active layer

The uncycled (formed) lithium-ion battery was discharged to 3.0 V at a current that was 1/10 of the nominal capacity, and then the voltage of the battery was measured, which was found to be 3.0-3.6 V; then the lithium-ion battery was disassembled to remove the positive electrode plate; the positive electrode plate was soaked in dimethyl carbonate

(DMC) for 3 h, naturally dried in a drying room, and then roasted in a muffle furnace at 300°C for 3 h, followed by sieving with a 200 mesh sieve to obtain a sample powder; and the content of the sodium element was tested using an inductively coupled plasma (ICP) instrument to obtain the content of sodium element in the positive electrode active layer. The results are shown in Table 5.

2) Ratio of sodium element content in the first positive electrode active layer to sodium element content in the second positive electrode active layer

The uncycled (formed) lithium-ion battery was discharged to 3.0 V at a current that was 1/10 of the nominal capacity, and then the voltage of the battery was measured, which was found to be 3.0-3.6 V; then the lithium-ion battery was disassembled to remove the positive electrode plate; an adhesive tape was sticked on the surface of the second active material layer and was forcefully ripped away to separate the second active material layer from the first active material layer; the positive electrode plate was then soaked in dimethyl carbonate (DMC) for 3 h, naturally dried in a drying room, and then roasted in a muffle furnace at 300°C for 3 h, followed by sieving with a 200 mesh sieve to obtain a sample powder; and the content of the sodium element was tested using an inductively coupled plasma (ICP) instrument to calculate the ratio of the sodium element content in the first positive electrode active layer to the sodium element content in the second positive electrode active layer. The results are shown in Table 5.

3) Battery capacity

At 25°C, a lithium-ion battery was first discharged to 3.0 V at 0.2C, charged to 4.5 V at 0.2C, then charged at a constant voltage until the current decreases to 0.02C, and then discharged to 3.0 V at 0.2C to obtain the discharge capacity Q of the battery, in mAh; and then the capacity per gram C of the positive electrode material, in mAh/g, can be calculated based on the weight of the positive electrode active material. The results are shown in Table 6.

4) Capacity retention

At 25°C, under the condition of 0.7C charging and 0.7C discharging, the lithium-ion battery in 1) was subjected to 1000 charge-discharge cycles, with voltage in a range of 3.0-4.5 V and 3.0-4.53 V, respectively. The discharge capacity at the first cycle and the discharge capacity at the 1000th cycle were measured, and the capacity retention Re1 under a charge-discharge voltage of 3.0-4.5 V and the capacity retention Re2 under a charge-discharge voltage of 3.0-4.53 V after 1000 cycles were calculated according to the equations as follows. The results are shown in Table 6.

Capacity retention Re1 = (discharge capacity at 1000th cycle)/(discharge capacity at first cycle) * 100%

Capacity retention Re2 = (discharge capacity at 1000th cycle)/(discharge capacity at first cycle) * 100%

Table 5

| No. | Total content of sodium element in positive electrode active layer (ppm) | Sodium element content ratio of first positive electrode active layer to second positive electrode active layer |
|---|---|---|
| Example 1 | 871.0 | 32.9 |
| Example 2 | 983.7 | 43.8 |
| Example 3 | 920.3 | 37.5 |
| Example 4 | 747.2 | 28.4 |
| Example 5 | 916.7 | 43.8 |
| Example 6 | 858.8 | 83.2 |
| Example 7 | 732.1 | 27.5 |
| Example 8 | 869.7 | 36.6 |
| Example 9 | 867.0 | 99.4 |
| Example 10 | 505.0 | 18.5 |

(continued)

| No. | Total content of sodium element in positive electrode active layer (ppm) | Sodium element content ratio of first positive electrode active layer to second positive electrode active layer |
|---|---|---|
| Example 11 | 505.0 | 18.5 |
| Example 12 | 2,225.3 | 175.2 |
| Example 13 | 1,673.5 | 87.6 |
| Example 14 | 3,478.7 | 136.3 |
| Example 15 | 311.7 | 9.6 |
| Comparative example 1 | 13.1 | / |
| Comparative Example 2 | 13.1 | / |
| Comparative Example 3 | 3,129.1 | / |
| Comparative Example 4 | 2,683.0 | / |

Test Example 4

A single-sided positive electrode plate was prepared according to the method in the examples and comparative examples described above; and the positive electrode plate was then punched using a die to obtain a small disk with a diameter of 12 mm; and the small disk was dried and weighed, and was then in a glove box under an Ar protective atmosphere, assembled into a button cell together with a 2025 button cell case, a Li metal wafer as a negative electrode, and a conventional high-voltage lithium cobaltate electrolyte.

Each of the obtained button cells was left to stand in a normal environment for 4 h and was subjected to a first charge-discharge capacity test under the following conditions: the button cell was charged to 4.55 V at a current rate ≤ 0.1C, charged to 0.025C at a constant voltage and cut off, then left to stand for 3 min, and then discharged to 3.0 V at a current rate ≤ 0.1C to obtain the corresponding discharge capacity per gram; some were selected to plot a curve diagram, with the discharge capacity per gram being C1, in mAh/g; and after the discharge curve was subjected to DQ/DV differential processing, and the number of peaks in the range of 3.0-4.0 V was defined as N. The results are shown in Table 6. FIG. 4 shows a differential capacity versus voltage curve of the half-cells in Example 1 and Comparative example 1 of the present invention.

Test Example 5

The lithium-ion battery was assembled according to the method in test example 2 and was discharged to 3.0 V at a current that was 1/10 of the nominal capacity, and then the voltage of the battery was measured, which was found to be 3.0-3.6 V; then the lithium-ion battery was disassembled to remove the positive electrode plate; the positive electrode plate was soaked in dimethyl carbonate (DMC) for 3 h, naturally dried in a drying room, and then processed with CP (cross-section polishing) technology, followed by an SEM imaging test to obtain the corresponding cross-sectional SEM image of the electrode plate, as shown in FIG. 5.

Table 6

| No. | Q (mAh) | Re1 (%) | Re2 (%) | C (mAh/g) | C1 (mAh/g) | N |
|---|---|---|---|---|---|---|
| Example 1 | 4,123 | 88.15 | 83.72 | 188.5 | 197.1 | 2 |
| Example 2 | 4,203 | 87.03 | 82.83 | 189.2 | 198.3 | 2 |
| Example 3 | 4,162 | 88.24 | 83.91 | 188.8 | 197.3 | 2 |
| Example 4 | 4,108 | 88.61 | 83.67 | 188.2 | 197.4 | 2 |
| Example 5 | 4,232 | 87.38 | 82.71 | 189.4 | 198.2 | 2 |
| Example 6 | 4,110 | 88.11 | 83.48 | 188.1 | 197.3 | 2 |
| Example 7 | 4,107 | 88.64 | 83.77 | 188.3 | 197.2 | 2 |
| Example 8 | 4,227 | 87.75 | 82.38 | 189.7 | 198.4 | 2 |

(continued)

| No. | Q (mAh) | Re1 (%) | Re2 (%) | C (mAh/g) | C1 (mAh/g) | N |
|---|---|---|---|---|---|---|
| Example 9 | 4,265 | 87.46 | 82.51 | 189.5 | 198.4 | 2 |
| Example 10 | 4,099 | 88.19 | 83.84 | 188.3 | 197.5 | 2 |
| Example 11 | 4,089 | 88.22 | 83.49 | 188.2 | 197.2 | 2 |
| Example 12 | 4,359 | 84.71% | 80.07% | 193.7 | 206.6 | 2 |
| Example 13 | 4,298 | 85.18% | 81.26% | 191.3 | 203.5 | 2 |
| Example 14 | 4,117 | 82.16% | 77.96% | 183.7 | 190.6 | 2 |
| Example 15 | 4215 | 83.21% | 78.06% | 189.6 | 198.4 | 2 |
| Comparative example 1 | 3,645 | 83.16 | 77.82 | 185.6 | 192.7 | 1 |
| Comparative Example 2 | 3,986 | 82.07 | 77.01 | 185.8 | 193.1 | 1 |
| Comparative Example 3 | 4,497 | 48.18 | 46.01 | 198.3 | 213.7 | 1 |
| Comparative Example 4 | 4,489 | 49.39 | 46.73 | 197.2 | 212.3 | 1 |

As can be seen from Tables 3-6, the positive electrode plates in the examples of the present invention enable the battery to have excellent cycling performance and internal resistance, along with a higher discharge capacity.

It should be finally noted that the forgoing examples are merely used for illustrating, rather than limiting, the technical solutions of the present invention. Although the invention has been described in details with reference to the foregoing examples, those of ordinary skill in the art should understand that the technical solutions described in the foregoing examples may still be modified, or some or all of the technical features thereof may be equivalently substituted; and the modifications or substitutions do not make the essence of the corresponding technical solutions depart from the scope of the technical solutions in the examples of the invention.

## Claims

**1.** A positive electrode plate, **characterized by** comprising a positive electrode current collector and a positive electrode active layer located on at least part of a surface of the positive electrode current collector, the positive electrode active layer comprises a first positive electrode active layer and a second positive electrode active layer that are stacked in a direction away from the positive electrode current collector;

a first positive electrode active material in the first positive electrode active layer comprises a first lithium metal oxide represented by formula 1 and/or a second lithium metal oxide represented by formula 2; and
a second positive electrode active material in the second positive electrode active layer comprises a third lithium metal oxide represented by formula 3;
wherein the first lithium metal oxide belongs to a Cmca space group of an orthorhombic crystal system;
the second lithium metal oxide belongs to a P63mc space group of a hexagonal crystal system;
the third lithium metal oxide C belongs to an R3-m space group of a trigonal crystal system;

$$Li_{n-y}Na_yCo_{c-a-b}M1_bM2_aO_2 \quad \text{formula 1,}$$

wherein in formula 1, $0.6 \leq n \leq 0.98$, $0 < y \leq 0.05$, $0 \leq a \leq 0.1$, $0 < b \leq 0.1$, $0.9 < c < 1.1$, and $0.95 < a + b + c < 1.15$; M1 comprises at least one of Al, Mg, Ti, Zr, La or Y, M2 is a doping element different from M1, and M2 at least comprises at least one of B, Te, W or K;

$$Li_{m-x}Na_xCo_{d-y1}D_{y1}O_2 \quad \text{formula 2,}$$

wherein in formula 2, $0.9 \leq m \leq 1.05$, $0 < x \leq 0.05$, $0 \leq y1 \leq 0.2$, $0.95 < d < 1.1$, $0.99 < d + y1 < 1.12$, and D comprises at least one of Al, Mg, Ti, Zr, Ni, Mn, Y, La, Sr, W, Sc, Ce, P, Nb, V, Ta, Te, B or K; and

$$Li_eCo_fE_gO_2 \quad \text{formula 3,}$$

wherein in formula 3, $0.9 \leq e \leq 1.1$, $0.95 < f \leq 1.05$, $0 \leq g \leq 0.15$, $0.95 \leq f + g \leq 1.2$, and E comprises at least one of Al, Mg, Ti, Zr, Ni, Mn, Y, La, Sr, W, Sc, Ce, P, Nb, V, Ta, Te, B or K.

2. The positive electrode plate according to claim 1, **characterized in that** an X-ray diffraction spectrum of the positive electrode active layer comprises a first diffraction peak and a second diffraction peak in a range of 2θ from 17.6° to 19.5°, and a 2θ difference between a first diffraction angle and a second diffraction angle ranges from 0.3° to 1.0°; preferably, a intensity ratio of the second diffraction peak to the first diffraction peak is (1 - 5):1, and a 2θ of the second diffraction peak is greater than a 2θ of the first diffraction peak.

3. The positive electrode plate according to claim 1 or 2, **characterized in that** a half-cell comprising the positive electrode plate and a lithium metal negative electrode, after being charged to 4.55 V at a current rate of less than or equal to 0.1 C, then charged until a cut-off current of 0.025 C at a constant voltage, and further discharged to 3.0 V at a current rate of less than or equal to 0.1 C, has a capacity-voltage differential curve where a number N of discharge peaks in a range of from 3.0 V to 4.0 V is not less than 2.

4. The positive electrode plate according to any one of claims 1 to 3, **characterized in that** the second positive electrode active material comprises a spherical particle or a spheroidal particle;

a Dv50 of the first positive electrode active material ranges from 3 μm to 10 μm; and a Dv50 of the second positive electrode active material ranges from 14 μm to 20 μm; and
the Dv50 of the first positive electrode active material is less than the Dv50 of the second positive electrode material.

5. The positive electrode plate according to any one of claims 1 to 4, **characterized in that** the first positive electrode active material is a bulk material;
preferably, the first positive electrode active material and the second positive electrode active material have different morphologies.

6. The positive electrode plate according to any one of claims 1 to 5, **characterized in that** the first positive electrode active material comprises a first crack inside, wherein an extension direction of the first crack forms an angle of less than 15° with a first direction, the second positive electrode active material in the second positive electrode active layer comprises a second crack inside, wherein an extension direction of the second crack forms an angle of less than 15° with the first direction and the first direction is length direction of the positive electrode current collector;
preferably, a number of the first crack is greater than a number of the second crack.

7. The positive electrode plate according to any one of claims 1 to 6, **characterized in that** a content of sodium element in the positive electrode active layer ranges from 20 ppm to 1000 ppm.

8. The positive electrode plate according to any one of claims 1 to 7, **characterized in that** the positive electrode active layer comprises sodium element, and a ratio of a content of sodium element in the first positive electrode active layer to a content of sodium element in the second positive electrode active layer is greater than 10.

9. The positive electrode plate according to any one of claims 1 to 8, **characterized in that** a thickness ratio of the first positive electrode active layer to the second positive electrode active layer ranges from 1:1 to 1:5;
preferably, a thickness of the first positive electrode active layer is not less than 5 μm, and a total thickness of the positive electrode active layer is greater than 85 μm.

10. The positive electrode plate according to claim 9, **characterized in that** the total thickness of the positive electrode active layer ranges from 85 μm to 150 μm.

11. The positive electrode plate according to any one of claims 1 to 10, **characterized in that** a single-sided areal density of the positive electrode active layer is not less than 17 $mg/cm^2$; and/or
an internal resistance of the positive electrode plate is not greater than 0.4 kΩ*cm.

12. The positive electrode plate according to any one of claims 1 to 11, **characterized in that** the positive electrode plate further comprises a safety layer, wherein the safety layer provided between the positive electrode active layer and the positive electrode current collector.

**13.** The positive electrode plate according to any one of claims 1 to 12, **characterized in that** a compacted density of the positive electrode plate is not less than 3.5 g/$cm^3$.

**14.** A lithium-ion secondary battery, **characterized in that** the lithium-ion battery secondary comprises the positive electrode plate according to any one of claims 1 to 13.

**15.** The lithium-ion secondary battery according to claim 14, **characterized in that** the lithium-ion secondary battery comprises an electrolyte, and the electrolyte comprises an additive represented by formula T:

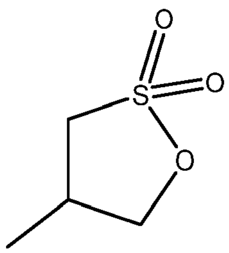

Formula T.

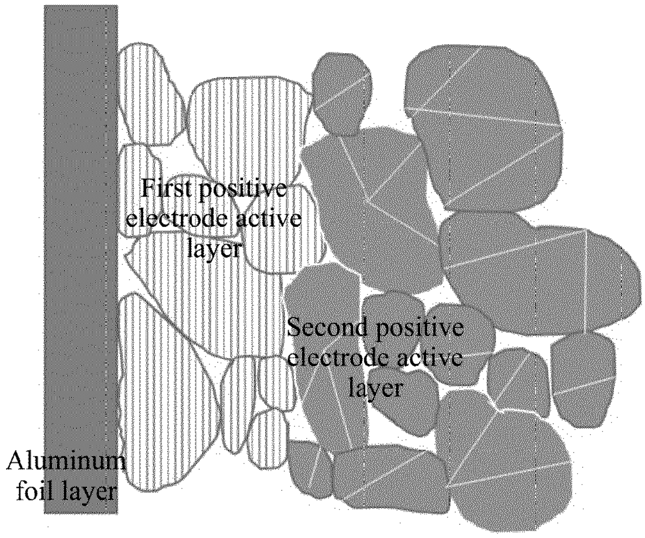


*FIG. 1*

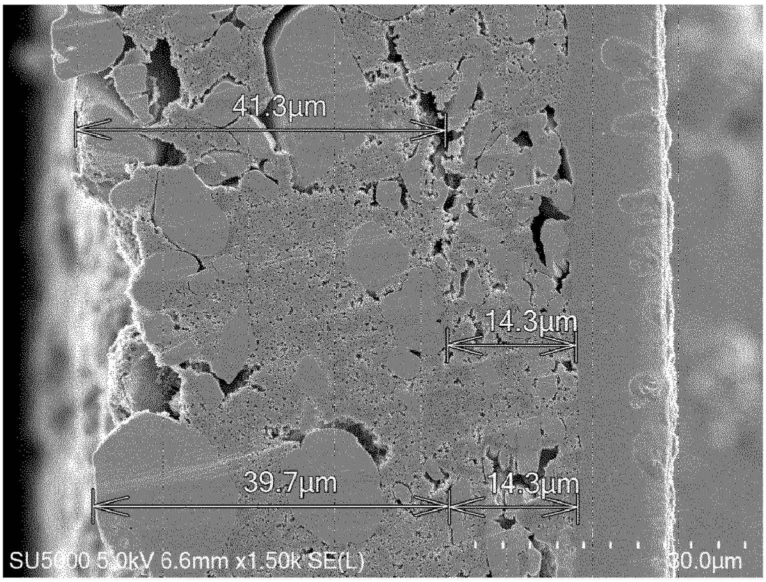


*FIG. 2*

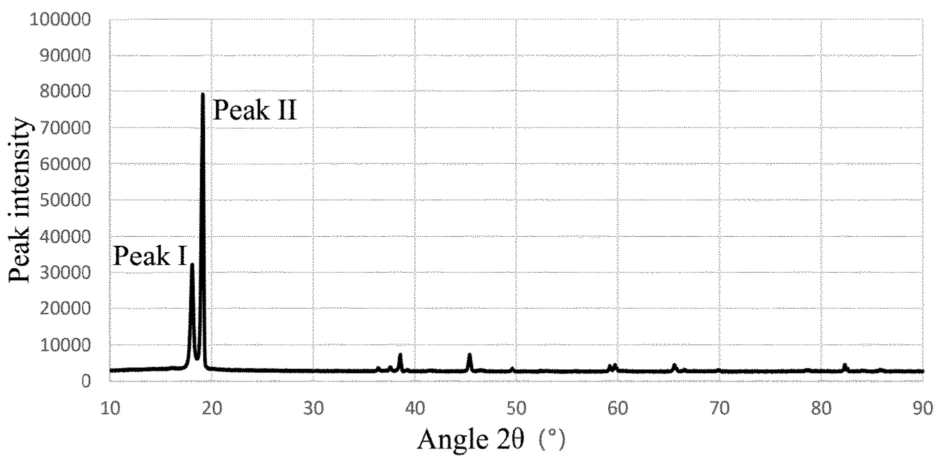


*FIG. 3*

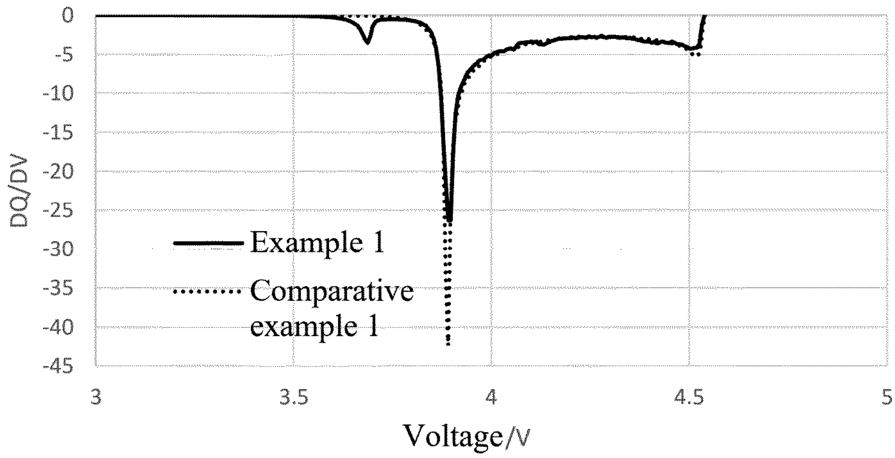
0
-5
-10
-15
-20
-25
-30
-35
-40
-45
DQ/DV
Example 1
Comparative example 1
3
3.5
4
4.5
5
Voltage/V

*FIG. 4*

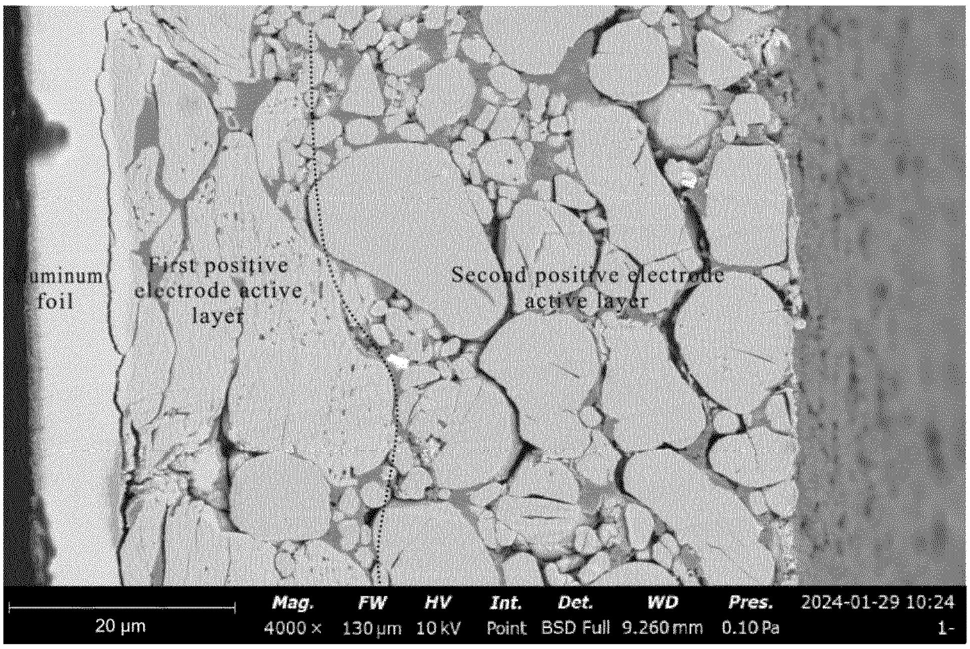
First positive electrode active layer
Second positive electrode active layer
20 μm
Mag. 4000 ×
FW 130 μm
HV 10 kV
Int. Point
Det. BSD Full
WD 9.260 mm
Pres. 0.10 Pa
2024-01-29 10:24

*FIG. 5*

Europäisches Patentamt
European Patent Office
Office européen des brevets

# EUROPEAN SEARCH REPORT

Application Number
EP 25 18 5276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/118096 A1 (WU XIA [CN]) 20 April 2023 (2023-04-20) * paragraph [0068] - paragraph [0078]; figures 1, 2 * ----- | 1-15 | INV. H01M4/36 H01M4/525 H01M4/505 H01M10/052 C01G53/00 H01M4/131 H01M4/1391 H01M10/0525 H01M4/02 H01M10/0567 |
| A | US 2010/104944 A1 (SAITO MOTOHARU [JP] ET AL) 29 April 2010 (2010-04-29) * claims 1-4, 9 * ----- | 1-15 | |
| A | EP 2 169 745 A1 (HITACHI VEHICLE ENERGY LTD [JP]) 31 March 2010 (2010-03-31) * paragraph [0010] * ----- | 1-15 | |

TECHNICAL FIELDS SEARCHED (IPC)

H01M

The present search report has been drawn up for all claims

1

| Place of search | Date of completion of the search | Examiner |
|---|---|---|
| Munich | 19 November 2025 | Martín Fernández, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 25 18 5276

This annex lists the patent family members relating to the patent documents cited in the above-mentioned European search report. The members are as contained in the European Patent Office EDP file on
The European Patent Office is in no way liable for these particulars which are merely given for the purpose of information.

19-11-2025

| Patent document cited in search report | Publication date | Patent family member(s) | Publication date |
|---|---|---|---|
| US 2023118096 A1 | 20-04-2023 | CN 113839012 A | 24-12-2021 |
| | | US 2023118096 A1 | 20-04-2023 |
| | | WO 2021249400 A1 | 16-12-2021 |
| US 2010104944 A1 | 29-04-2010 | AT E544188 T1 | 15-02-2012 |
| | | CN 101573813 A | 04-11-2009 |
| | | EP 2139058 A1 | 30-12-2009 |
| | | JP 4827931 B2 | 30-11-2011 |
| | | JP WO2008081839 A1 | 30-04-2010 |
| | | KR 20090096534 A | 10-09-2009 |
| | | US 2010104944 A1 | 29-04-2010 |
| | | WO 2008081839 A1 | 10-07-2008 |
| EP 2169745 A1 | 31-03-2010 | CN 101714630 A | 26-05-2010 |
| | | EP 2169745 A1 | 31-03-2010 |
| | | JP 4972624 B2 | 11-07-2012 |
| | | JP 2010086693 A | 15-04-2010 |
| | | KR 20100036929 A | 08-04-2010 |
| | | US 2010081055 A1 | 01-04-2010 |

EPO FORM P0459

For more details about this annex : see Official Journal of the European Patent Office, No. 12/82